# EUROPEAN PATENT SPECIFICATION

(11) **EP 3 958 256 B1**
(45) Date of publication and mention of the grant of the patent: **01.11.2023**
(21) Application number: 21213354.0
(22) Date of filing: 09.12.2021
(51) Int. Cl.: G10L 15/32, G06F 3/16, H04W 4/44, G06F 40/205, G10L 15/30, G10L 15/183, G10L 15/22

(54) **VOICE PROCESSING METHOD, APPARATUS, DEVICE AND STORAGE MEDIUM FOR VEHICLE-MOUNTED DEVICE**
SPRACHVERARBEITUNGSVERFAHREN, EINRICHTUNG, VORRICHTUNG UND SPEICHERMEDIUM FÜR FAHRZEUGMONTIERTE VORRICHTUNG
PROCÉDÉ DE TRAITEMENT VOCAL, APPAREIL, DISPOSITIF ET SUPPORT DE STOCKAGE POUR DISPOSITIF EMBARQUÉ

(30) Priority: 22.12.2020 CN 202011530797
(43) Date of publication of application: 23.02.2022
(73) Proprietor: Apollo Intelligent Connectivity (Beijing) Technology Co., Ltd., Beijing 100176 (CN)
(72) Inventor: WANG, Kun, Beijing (CN); HE, Xueyan, Beijing (CN); HE, Wence, Beijing (CN)
(74) Representative: J A Kemp LLP

(56) References cited:
- WO-A1-2020/119438
- CN-A- 109 961 792
- CN-A- 111 145 757
- US-A1- 2020 312 324

## Description

### TECHNICAL FIELD

The present application relates to the voice technology, the vehicle networking technology and the intelligent vehicle technology in the field of artificial intelligence, and in particular, to a voice processing method, apparatus, device and storage medium for a vehicle-mounted device.

### BACKGROUND

With the development of technology, such as Internet of Things technology, intelligent vehicle technology and voice technology, etc., the intelligent degree of the vehicle-mounted device is getting higher and higher, and can even realize the function of voice assistant. When realizing the function of voice assistant, the vehicle-mounted device can perform some set operations by recognizing the user voice, for example opening the window, turning on the air conditioner in the vehicle and playing music.

Offline speech recognition or online speech recognition is usually used by the vehicle-mounted device when recognizing user voice. Offline speech recognition has low accuracy, can only recognize a few sentence patterns, and has low applicability. The accuracy of online speech recognition is high. However, the network performance of vehicle-mounted scenario is unstable, and the weak network scenario is prone to occur. The efficiency of offline speech recognition in weak network scenario is not high, which affects the voice response speed of vehicle-mounted device.

How to improve the voice response speed of vehicle-mounted device under the weak network scenario is an urgent problem to be solved.

CN111145757A discloses a vehicle speech intelligent Bluetooth integrated device and method.

US 2020/312324 A1 discloses a method for selecting a speech recognition result on a computing device.

CN109961792A discloses a method for speech recognition, it realizes offline and online mixed speech recognition, thus improving the speed of speech recognition.

WO 2020119438 A1 relates to the technical field of voice control, and in particular relates to a voice control method, a cloud server, and a terminal device. The present invention aims to solve the problem of poor user experience with regard to existing washing machines that have voice recognition functions. The voice control method comprises: a terminal device receiving voice information (S101); the terminal device querying a control instruction corresponding to the voice information from a local voice database (S102); when the control instruction corresponding to the voice information is not queried in the local voice database, the terminal device uploading the voice information to a cloud server (S103); the cloud server parsing the control instruction corresponding to the voice information (S104); when the control instruction corresponding to the voice information is parsed, the cloud server sending the control instruction to the terminal device (S105); and the terminal device receiving the control instruction, and performing a corresponding operation on the basis of the control instruction (S106). The present invention may improve the response speed of the terminal device that has the voice recognition function, and thus greatly improve the user experience of the user.

### SUMMARY

The invention is set out in the appended set of claims. The present application provides a voice processing method, apparatus, device and storage medium for a vehicle-mounted device.

According to a first aspect of the present application, there is provided a voice processing method for a vehicle-mounted device, including:
acquiring a user voice;
performing an offline recognition on the user voice to obtain an offline recognition text, and sending the user voice to a server for performing an online voice recognition and semantics parsing on the user voice;
parsing, if there is a text matching the offline recognition text in a local text database, the offline recognition text to obtain an offline parsing result of the user voice;
controlling the vehicle-mounted device according to the offline parsing result.

According to a second aspect of the present application, there is provided a voice processing apparatus for a vehicle-mounted device, including:
an acquiring unit, configured to acquire a user voice;
a recognizing unit, configured to perform an offline recognition on the user voice to obtain an offline recognition text, and send the user voice to a server for performing an online voice recognition and semantics parsing on the user voice;
a parsing unit, configured to parse, if there is a text matching an offline recognition text in a text database, the offline recognition text to obtain an offline parsing result of the user voice;
a controlling unit, configured to control the vehicle-mounted device according to the offline parsing result.

According to a third aspect of the present application, there is provided an electronic device, including:
at least one processor; and
a memory communicatively connected to the at least one processor; where
the memory stores instructions executable by the at least one processor, and the instructions are executed by the at least one processor to enable the at least one processor to execute the method as described in the first aspect.

According to a fourth aspect of the present application, there is provided a non-transitory computer readable storage medium storing a computer instruction, where the computer instruction is used for causing the computer to execute the method as described in the first aspect.

According to a fifth aspect of the present application, there is provided a computer program product, including: a computer program stored in a readable storage medium from which at least one processor of an electronic device can read the computer program, and the at least one processor executes the computer program to cause the electronic device to execute the method as described in the first aspect.

According to a sixth aspect of the present application, there is provided a vehicle including a vehicle body, where a central control device of the vehicle body includes the electronic device as described in the third aspect.

According to the technical solution of the present application, both the offline recognition and online recognition are performed on the user voice at the same time; if the offline recognition text obtained by the offline recognition is located in the local text database, the offline recognition text is parsed to obtain an offline parsing result, based on which the vehicle-mounted device is controlled. Therefore, under the vehicle-mounted environment, especially under the weak network scenario of vehicle, the accuracy of user voice processing is ensured and the efficiency of user voice processing is improved, so that the accuracy of voice response of vehicle-mounted device is ensured and the voice response efficiency of vehicle-mounted device is improved.

Understanding that what is described herein is not intended to identify key or important features of the embodiments of the present application, nor is it used to limit the scope of the present application, and other features of the present application will become apparent from the following description.

### BRIEF DESCRIPTION OF THE DRAWINGS

The accompanying drawings are used for better understanding of the present solution and do not constitute a limitation to the present application, in which:
FIG. 1 is an example diagram of an application scenario that can implement the embodiments of the present application;
FIG. 2 is a schematic diagram according to Embodiment I of the present application;
FIG. 3 is a schematic diagram according to Embodiment II of the present application;
FIG. 4 is a schematic diagram according to Embodiment III of the present application;
FIG. 5 is a schematic diagram according to Embodiment IV of the present application;
FIG. 6 is a schematic diagram according to Embodiment V of the present application;
FIG. 7 is a schematic diagram according to Embodiment VI of the present application;
FIG. 8 is a schematic diagram according to Embodiment VII of the present application;
FIG. 9 is a block diagram of an electronic device used to implement the voice processing method for a vehicle-mounted device of an embodiment of the present application.

### DESCRIPTION OF EMBODIMENTS

The exemplary embodiments of the present application are described below with reference to the accompanying drawings, including various details of the embodiments of the present application that are useful for understanding the present application, and should be considered as merely exemplary.

Likewise, for clarity and conciseness, descriptions of well-known functions and structures are omitted in the following description.

As the intelligent degree of vehicle becomes higher and higher, the vehicle-mounted device can realize the function of voice assistant. For example, a voice assistant can be installed on the vehicle's central control device. The voice assistant collects, recognizes, and parses the user voice to obtain the parsing result. The central control device can perform corresponding control operations based on the parsing result. For example, when the user voice is "playing music", the central control device runs the music software and plays music. Further for example, when the user voice is "opening the car window", the central control device controls the car window to be opened. And further for example, when the user voice is "opening the air conditioner", the central control device controls the air conditioner in the vehicle to be turned on.

Generally, there are two ways for the voice assistant to recognize and parse user voice: one is offline voice recognition and semantics parsing, and the other is online voice recognition and semantics parsing.

Where, the voice recognition is to recognize or translate voice into corresponding text.

Where, the semantics parsing is to parse the semantics contained in the text.

In semantics parsing, different texts with similar meanings can be parsed to be the same or similar semantics. For example, the semantics of "navigating to a gas station" and that of "navigating to a nearby gas station" are almost the same, and "let's get some music" and "playing music" have the same semantics. Therefore, in order to ensure that the central control device can perform the same operation when the user uses different language expressions to express the same meaning, semantics parsing is required after the user voice are recognized.

The above two methods for recognizing and parsing user voice have the following advantages and disadvantages:
(I) the efficiency of offline voice recognition and semantics parsing is relative higher. However, under the limitation of the computing capability and storage capacity of the vehicle-mounted device, the accuracy for offline voice recognition and semantics parsing is not high, and only a few sentence patterns can be recognized, so its applicability is not high;
(II) the online voice recognition and semantics parsing can be performed on devices with excellent computing capability and storage capacity, which is more accurate, but the efficiency is limited by the network.

The vehicle sometimes passes through areas with weak network signal strength during the traveling, for example passing through the tunnel or bridge. In area with weak network signal strength, i.e., in weak network scenario, the online semantics recognition is inefficient, and the vehicle-mounted device may even not respond to the user voice for a long time.

The embodiment of the present application provides a voice processing method, apparatus, device, and storage medium for the vehicle-mounted device, which are applied to the voice technology, the Internet of Things technology, and intelligent vehicle technology in the field of the data processing, so as to achieve that the accuracy of the voice response of the vehicle-mounted device is ensured and the efficiency of the voice response of the vehicle-mounted device is improved under the vehicle-mounted weak network scenario.

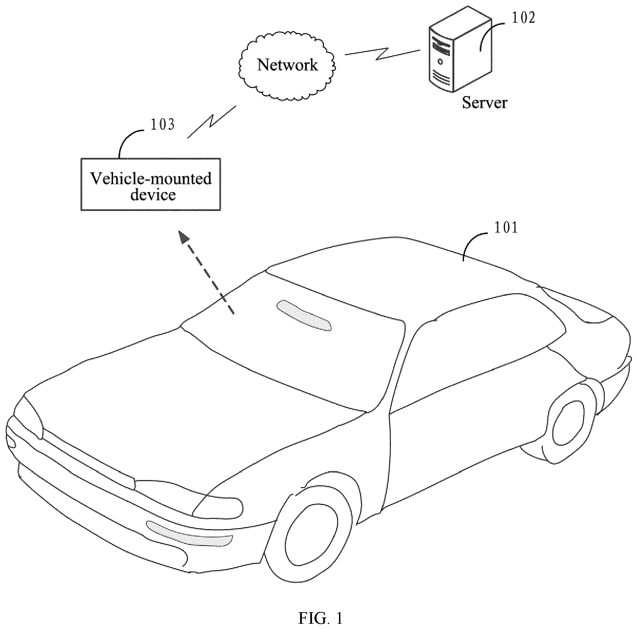

FIG. 1 is an example diagram of an application scenario that can implement the embodiments of the present application. As shown in FIG. 1, the application scenario includes the vehicle 101, the server 102, and the vehicle-mounted device 103 located within the vehicle 101. The vehicle-mounted device 103 and the server 102 can perform network communication therebetween. The vehicle-mounted device 103 sends the user voice to the server 102, so as to perform the online parsing of the user voice on the server 102.

Where, the vehicle-mounted device 103 is, for example, a central control device on the vehicle 101. Alternatively, the vehicle-mounted device 103 is, for example, other electronic devices that communicate with the central control device on the vehicle 101, for example a mobile phone, a wearable smart device, a tablet computer, etc.

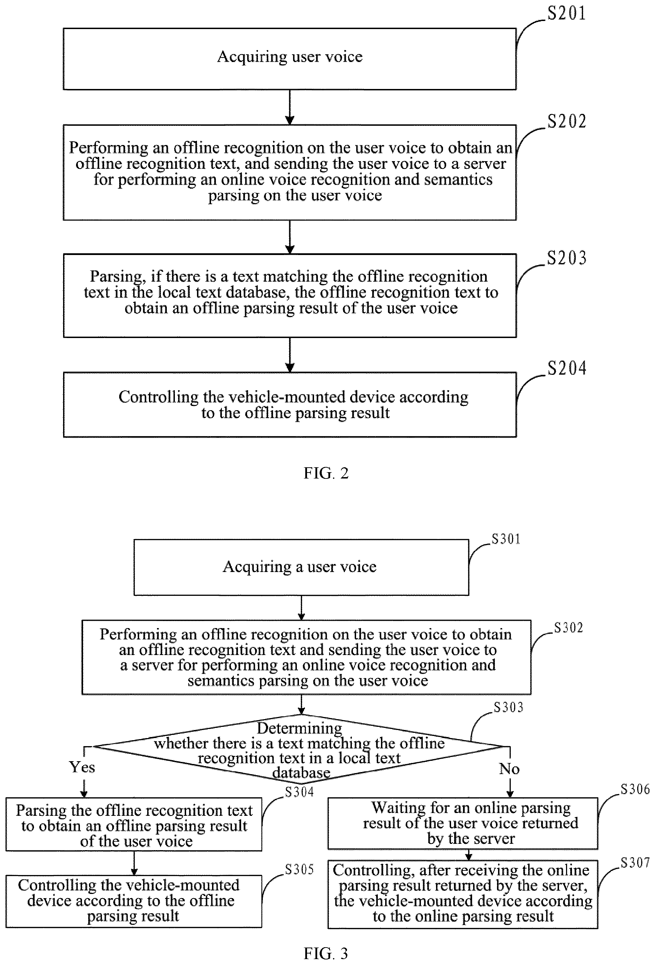

FIG. 2 is a schematic diagram according to Embodiment I of the present application. As shown in FIG. 2, the voice processing method for the vehicle-mounted device provided in the present embodiment includes:
S201, acquiring a user voice.

Illustratively, the executive entity of the present embodiment is the vehicle-mounted device as shown by FIG. 1.

In one example, a voice collector is provided on the vehicle-mounted device, and the vehicle-mounted device collects the user voice within the vehicle by the voice collector. Where the voice collector is, for example, a microphone.

In another example, a voice collector that can communicate with the vehicle-mounted device is provided on the vehicle, so the vehicle-mounted device can receive the user voice collected by the voice collector within the vehicle.

Where, the voice collector and the vehicle-mounted device can communicate directly or indirectly through wired or wireless manners. For example, if the vehicle-mounted device is the vehicle's central control device, the central control device can directly receive the user voice collected by the voice collector within the vehicle. If the vehicle-mounted device is other electronic device that communicates with the central control device of the vehicle, the vehicle-mounted device can receive the user voice that is collected within the vehicle by the voice collector and forwarded by the central control device.

Illustratively, the vehicle-mounted device acquires the user voice in the voice wake-up state, so as to avoid the consequence of misrecognition or wrong control of the vehicle-mounted device that is caused by acquiring the user voice when the user does not need to use the voice function.

Illustratively, the user, for example, by inputting a wake-up word by voice, or by pressing a physical button on the vehicle-mounted device or a virtual key on the screen of the vehicle-mounted device, enables the vehicle-mounted device to enter the voice wake-up state.

S202, performing an offline recognition on the user voice to obtain an offline recognition text, and sending the user voice to a server for performing an online voice recognition and semantics parsing on the user voice.

Where, a voice recognition model is pre-deployed on the vehicle-mounted device. The voice recognition model is, for example, a neural network model, which is not limited herein.

Specifically, after the user voice is acquired, the voice recognition model is used to perform the offline recognition on the user voice, and the user voice is sent to the server at the same time for the server to perform the online voice recognition and semantics parsing on the user voice, so that both the offline recognition and the online recognition on the user voice are performed simultaneously. The rate at which the vehicle-mounted device sends the user voice to the server is limited by the strength of the network signal. In the weak network scenario, the rate is not high, and the efficiency of online recognition is lower than that of offline recognition. When both the offline recognition and the online recognition on the user voice are performed simultaneously, the offline recognition text of the user voice will be obtained first.

Where, the offline recognition text can be a single word, or can be one or multiple sentences composed of multiple words. For example, when the offline recognition text is a single word, the offline recognition text is "navigating"; when the offline recognition text is a single sentence, the offline recognition text is "navigating to gas station"; when the offline recognition text is multiple sentences, the offline recognition text is "the starting point is A, the destination is B, and starting navigation".

S203, parsing, if there is a text matching the offline recognition text in the local text database, the offline recognition text to obtain an offline parsing result of the user voice.

Where, the text database is pre-stored on the vehicle-mounted device, it includes a plurality of preset texts, and when the text in the text database is offline parsed, the accuracy is relatively higher. The offline parsing result of the user voice can be understood as the semantics of the user voice parsed and acquired through offline manner.

Specifically, after acquiring the offline recognition text, the text matching may be performed on the offline recognition text with multiple texts in the text database. For example, the text features of the offline recognition text and those of each text in the text database may be extracted and the text features of the offline recognition text and those of each text in the text database may be matched. The text matching process is not limited herein.

If there is the text matching the offline recognition text in the text database, that is, if there is an offline recognition text in the text database, it indicates that the accuracy of parsing offline recognition text by offline manner is relatively higher. Therefore, the offline recognition text is parsed on the vehicle-mounted device to obtain the offline parsing result of the user voice, and S204 is executed.

S204, controlling the vehicle-mounted device according to the offline parsing result.

Where, multiple mapping relationships between semantics and control operation are preset in the vehicle-mounted device.

For example, the control operation corresponding to the semantics "playing music" is that starting the music playing application in the vehicle-mounted device and playing music; or for example, the control operation corresponding to the semantics "turning on air conditioner" is that sending a starting instruction to the air conditioner within the vehicle.

Specifically, after the offline parsing result is obtained, the control operation corresponding to the offline parsing result can be searched from the multiple mapping relationships between semantics and control operation and be executed, so as to control the vehicle-mounted device.

It can be seen that, according to the offline parsing result, not only the vehicle-mounted device may be controlled directly or indirectly, for example, when the current vehicle-mounted device is a central control device, the central control device can be controlled directly to run the corresponding application, but also the central control device may be controlled directly to send the control instruction to other vehicle-mounted devices, so as to indirectly control other vehicle-mounted devices, for example the air conditioner, the car window, and the wiper.

In the present embodiment, the use voice is acquired, and both the offline recognition and online recognition are performed on the use voice simultaneously. The efficiency of online recognition under weak network scenario is significantly lower than that of offline recognition, so the offline recognition text of the user voice will be obtained. After the offline recognition text is obtained, if there is offline recognition text in the local text database, it indicates that the offline semantics parsing can be used and it is more accurate. Therefore, the offline semantics parsing is performed on the offline recognition text to obtain the offline parsing result of the user voice. The vehicle-mounted device is controlled based on the offline parsing result.

Therefore, in the present embodiment, by the manner that both the offline recognition and the online recognition are performed simultaneously and the offline parsing is adopted conditionally, not only the accuracy for voice processing is ensured, but also the efficiency of voice processing is improved, thereby ensuring the accuracy for voice response of the vehicle-mounted device and improving the efficiency of voice response of the vehicle-mounted device at the same time.

FIG. 3 is a schematic diagram according to Embodiment II of the present application. As shown in FIG. 3, the voice processing method for the vehicle-mounted device provided in the present embodiment includes:
S301, acquiring a user voice.
S302, performing an offline recognition on the user voice to obtain an offline recognition text and sending the user voice to a server for performing an online voice recognition and semantics parsing on the user voice.
S303, determining whether there is a text matching the offline recognition text in a local text database.

If there is the text matching the offline recognition text in the text database, the S304 is executed to use the offline manner to perform the recognition and parsing on the user voice.

If there is no text matching the offline recognition text in the text database, the offline parsing performed on the offline recognition text cannot be ensured to reach a relatively higher accuracy. The S306 can be executed to use the online manner to perform the recognition and parsing the user voice.

S304, parsing the offline recognition text to obtain an offline parsing result of the user voice.

S305, controlling the vehicle-mounted device according to the offline parsing result.

Where, implementations of S301 to S305 can be referred to the foregoing embodiments and will not be repeated herein.

S306, waiting for an online parsing result of the user voice returned by the server.

Specifically, online recognition undergoes at least two sending-receiving processes. One occurs when the vehicle-mounted device sends the user voice to the server, and the other occurs when the server returns the online parsing result of the user voice to the vehicle-mounted device. Offline recognition does not have such sending-receiving process. Under the weak network environment, the communication rate between the vehicle-mounted device and the server is relatively slower. Therefore, after obtaining the offline recognition text of the user voice through offline recognition, if there is no text matching the offline recognition text in the text database, it is required to wait for the server to return the online parsing result of the user voice.

Illustratively, the computing performance and storage performance of the server are better than those of the vehicle-mounted device. Therefore, compared with the vehicle-mounted device, the server can recognize and parse the user voice through a more complete and accurate voice recognition model and semantics parsing model for ensuring an accuracy of the parsing on the user voice.

S307, controlling, after receiving the online parsing result returned by the server, the vehicle-mounted device according to the online parsing result.

Where, the online parsing result of the user voice can be understood as the semantics of the user voice parsed and obtained through the online manner (that is, through a remote server).

Specifically, after the online parsing result returned by the server is waited, the vehicle-mounted device is controlled according to the online parsing result, where the process of controlling the vehicle-mounted device according to the online parsing result is similar to that of controlling the vehicle-mounted device according to the offline parsing result, which may refer to the description of the foregoing embodiments and will not be repeated herein.

In the present embodiment, the use voice is acquired, and both the offline recognition and online recognition are performed on the use voice simultaneously. The efficiency of online recognition under weak network scenario is significantly lower than that of offline recognition, so the offline recognition text of the user voice will be obtained. After the offline recognition text is obtained, if there is text matching offline recognition text in the local text database, it indicates that the offline semantics parsing can be used and it is more accurate. Therefore, the offline semantics parsing is performed on the offline recognition text to obtain the offline parsing result of the user voice. The vehicle-mounted device is controlled based on the offline parsing result.

If there is no text matching the offline recognition text in the local text database, in order to ensure the accuracy of the user voice processing, the online parsing result returned by the server is waited, and the vehicle-mounted device is controlled based on the online parsing result.

Therefore, in the present embodiment, both the offline recognition and online recognition are performed simultaneously, and the conditions for adopting the offline parsing and the online parsing are set according to the text database, which not only ensures the accuracy for voice processing, but also improves the efficiency of voice processing, thereby ensuring the accuracy of voice response of the vehicle-mounted device and improving the efficiency of voice response of the vehicle-mounted device.

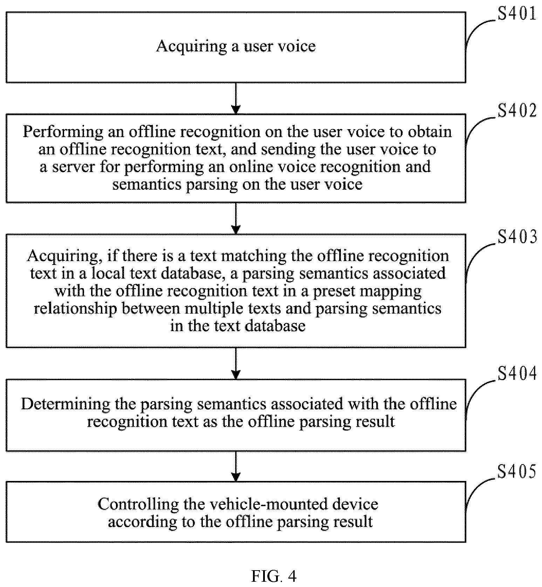

FIG. 4 is a schematic diagram according to Embodiment III of the present application. As shown in FIG. 4, the voice processing method for the vehicle-mounted device provided in the present embodiment includes:
S401, acquiring a user voice.
S402, performing an offline recognition on the user voice to obtain an offline recognition text, and sending the user voice to a server for performing an online voice recognition and semantics parsing on the user voice.

Where, implementations of S401 to 5402 can be referred to the foregoing embodiments and will not be repeated herein.

S403, acquiring, if there is a text matching the offline recognition text in a local text database, a parsing semantics associated with the offline recognition text in a preset mapping relationship between multiple texts and parsing semantics in the text database.

Where, the text database includes the preset mapping relationship between multiple texts and parsing semantics, and the parsing semantics is semantics. In the preset mapping relationship between multiple texts and parsing semantics, multiple texts may correspond to the same parsing semantics, or to different parsing semantics. For example, the text "playing music" and the text "let's have some music" correspond to the same parsing semantics, and the text "turning on the air conditioner" and the text "playing music" correspond to different parsing semantics.

Specifically, if there is a text matching the offline recognition text in the text database, the parsing semantics corresponding to the text matching the offline recognition text can be obtained from the preset mapping relationship between multiple texts and the parsing semantics in the text database. The parsing semantics corresponding to the text matching the offline recognition text is the parsing semantics associated with the offline recognition text, which ensures the accuracy of offline parsing.

S404, determining the parsing semantics associated with the offline recognition text as the offline parsing result.

S405, controlling the vehicle-mounted device according to the offline parsing result.

Where, the implementation of S405 can be referred to the foregoing embodiments and will not be repeated herein.

In the present embodiment, when the user voice is offline recognized, it is sent to the server for performing the online recognition and online parsing on the user voice. After the offline recognition text of the user voice is obtained first, if there is a text matching the offline recognition text in the local text database, the offline parsing result associated with the offline recognition text is determined according to the mapping relationship between multiple texts and the parsing semantics in the text database, which ensures the accuracy of parsing the offline recognition text by using the offline manner. The vehicle-mounted device is then controlled according to the offline parsing result.

Therefore, in the present embodiment, both the offline recognition and online recognition are performed simultaneously, under the condition that the offline recognition text is included in the text database, the offline parsing result is determined according to the mapping relationship between multiple texts and parsing semantics, which ensures the accuracy of voice processing and improves the efficiency of voice processing, thereby ensuring the accuracy of voice response of the vehicle-mounted device and improving the efficiency of voice response of the vehicle-mounted device.

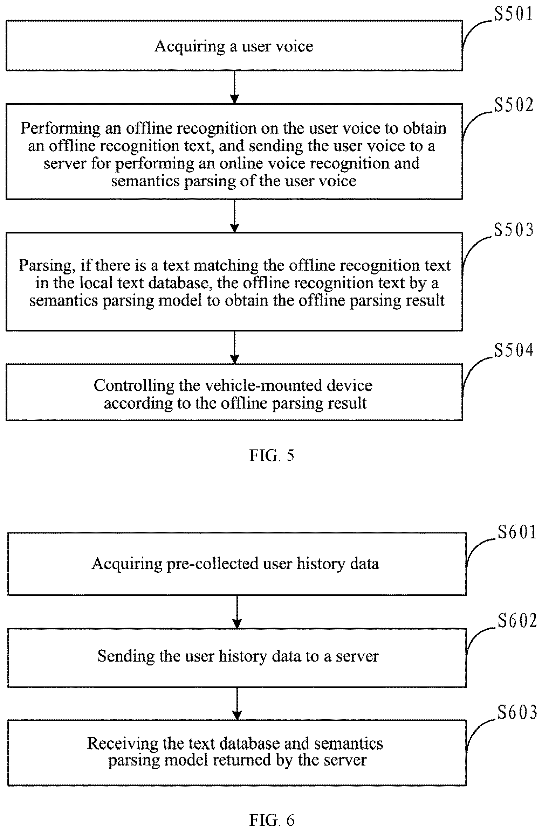

FIG. 5 is a schematic diagram according to Embodiment IV of the present application. As shown in FIG. 5, the voice processing method for the vehicle-mounted device provided in the present embodiment includes:
S501, acquiring a user voice.
S502, performing an offline recognition on the user voice to obtain an offline recognition text, and sending the user voice to a server for performing an online voice recognition and semantics parsing of the user voice.

Where, implementations of S501 to S502 can be referred to the foregoing embodiments and will not be repeated herein.

S503, parsing, if there is a text matching the offline recognition text in the local text database, the offline recognition text by a semantics parsing model to obtain the offline parsing result, where training data used by the semantics parsing model in a training process includes a text in the text database.

Where, a semantics parsing model is pre-deployed on the vehicle-mounted device. The input of the semantics parsing model is a text and the output thereof is the semantics of the text. For example, the semantics parsing model adopts a language model in the field of natural language processing, and the specific structure of the semantics parsing model is not limited herein.

Specifically, if there is a text matching the offline recognition text in the local text database, the offline recognition text is parsed through the semantics parsing model deployed locally to obtain the parsing semantics of the offline recognition text, that is, the offline parsing result of the offline recognition text.

Illustratively, before the semantics parsing model is deployed on the vehicle-mounted device, the vehicle-mounted device or the server may train the semantics parsing model according to pre-collected training data, so as to improve the semantics parsing accuracy of the semantics parsing model. Where, the training data includes all the texts in the text database. During the training, the semantics parsing model is trained according to all the texts in the text database, which at least ensures the accuracy of semantics parsing of each text in the text database by the semantics parsing model.

Furthermore, after the semantics parsing model is trained according to all the texts in the text database, all the texts in the text database are parsed by the trained semantics parsing model, and the text in the text database that cannot be accurately parsed by the semantics parsing model is deleted from the text database, so as to ensure 100% accuracy for parsing the text in the text database by the semantics parsing model.

S504, controlling the vehicle-mounted device according to the offline parsing result.

Where, the implementation of S504 can be referred to the foregoing embodiments and will not be repeated herein.

In the present embodiment, both the offline recognition and online recognition are performed simultaneously, under the condition that the offline recognition text is included in the text database, the offline recognition text is parsed according to the locally deployed semantics parsing model, where the training data of the semantics parsing model includes texts in the text database. Therefore, the semantics parsing model with high parsing accuracy of the text in the text database ensures the accuracy of semantics parsing in an offline manner, which ensures the accuracy of voice processing and improves the efficiency of voice processing, thereby ensuring the accuracy of the voice response of the vehicle-mounted device and improving the efficiency of the voice response of the vehicle-mounted device.

In some embodiments, the text database may include texts preset by the vehicle manufacturer. For example, the vehicle manufacturer can set some question sentences, declarative sentences and/or keywords as the texts in the text database, and set the semantics corresponding to each text and the operation corresponding to each semantic. Therefore, the text preset by the vehicle manufacturer can be accurately recognized and parsed in an offline manner.

In some embodiments, in addition to that the text database includes the texts preset by the car manufacturer, the text database can also be constructed based on pre-collected user history data, so that the text database can cover habits of the user voice, and the voice content frequently used by the user can be accurately offline recognized and parsed.

Where, the text database can be constructed on the vehicle-mounted device or on a server. During the text database construction on the server, the mapping relationship between multiple texts and parsing semantics in the text database can also be constructed, and the text database including the mapping relationship between multiple texts and parsing semantics can be sent to the vehicle-mounted device; or the server can train the semantics parsing model based on the text database and send the text database and the semantics parsing model to the vehicle-mounted device.

Taking the construction of the text database and the training of the semantics parsing model which are executed on the server as an example, FIG. 6 is a schematic diagram according to Embodiment V of the present application. As shown in FIG. 6, the text database and the semantics parsing model can be acquired through the following processes:
S601, acquiring pre-collected user history data.

Where, the vehicle-mounted device pre-collects user history data and stores them. The user history data includes multiple texts input by a user through voice within a history time period. The history time period is a period of time before the current moment, for example the past one month and the past half month.

Illustratively, due to the limited storage space of the vehicle-mounted device, the vehicle-mounted device can record the text corresponding to the user voice input within the recent one month or the recent one week, and the text input earlier than the recent one month or the recent one week can be deleted or overwritten.

S602, sending the user history data to a server.

In an example, the vehicle-mounted device can actively send user history data to the server, for example, send one user history data to the server every preset time.

In another example, after receiving the data acquisition request from the server, the vehicle-mounted device sends pre-collected user history data to the server.

In another example, the server itself can collect user history data of different vehicle-mounted devices, for example, it can save the text corresponding to the user voice sent by the vehicle-mounted device during online recognition.

S603, receiving the text database and semantics parsing model returned by the server.

Specifically, after the server receives the user history data, if there is no text database on the server, the text database is constructed based on the user history data; if there is a text database on the server, the text database is updated based on the user history data; the server trains the semantics parsing model based on the constructed or updated text database.

When the server constructs or updates the text database, one possible implementation is: screening the repeated text in the user history data, that is, screening out the repeated text from the user history data, and constructing the text database with each text of the user history data after screening, or merging the user history data after screening with the text database to update the text database.

When the server constructs or updates the text database, another possible implementation is: counting, in the user history data, the occurrence frequency or proportion of each text in the user history data; screening the multiple texts in the user history data according to the occurrence frequency and/or proportion of each text in the user history data; constructing or updating the text database according to the text after screening in the user history data.

Where, when the occurrence frequency or proportion of each text in the user history data is obtained, the texts can be ordered according to the sequence of the occurrence frequency or proportion of each text from high to low, and the text whose occurrence frequency is greater than or equal to the first threshold value and/or the text whose a proportion is greater than or equal to the second threshold value are acquired.

Therefore, the constructed text database includes the text, in the user history data, whose occurrence frequency is greater than or equal to the first threshold value, and/or the total proportion of all texts in the text database in the user history data is greater than or equal to the preset second threshold value, which effectively improves the rationality of the text contained in the text database, so that the text database can cover the voice content frequently used by the user recently, where the first threshold value and the second threshold value can be the preset same value or different value.

When the server constructs or updates the text database, a further possible implementation is: different time weights for different time periods is preset; when the text database is constructed or updated, the time weight of each text in the user history data is determined; for each text in the user history data, the text weight of each text in the user history data is calculated based on the product of the time weight and the number of occurrences of the text in the user history data; a preset number of texts from user history data are selected according to the sequence of the text weight from high to low for constructing or updating the text database, or the text whose text weight is greater than a preset weight threshold value is selected from the user history data for constructing or updating the text database. Therefore, the number of occurrences and/or occurrence frequency of the text, as well as the occurrence time of the text are considered, which improves the rationality of the text contained in the text database, so that the text database can accurately offline recognize and parse the voice content frequently used by the user recently.

The process of constructing and/or updating the text database in each of the above examples can also be executed on the vehicle-mounted device. The vehicle-mounted device sends the constructed and/or updated text database to the server. The server trains the semantics parsing model based on the text database, and then sends the semantics parsing model to the vehicle-mounted device.

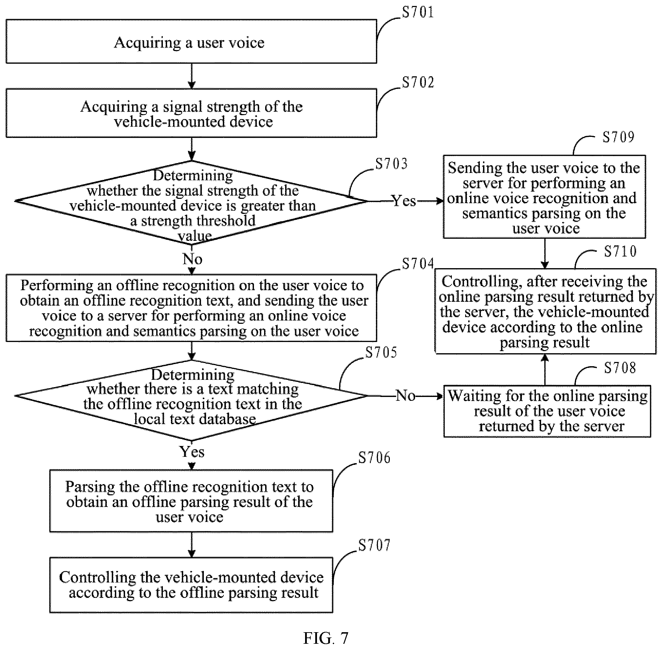

FIG. 7 is a schematic diagram according to Embodiment VI of the present application. As shown in FIG. 7, the voice processing method for the vehicle-mounted device includes:
S701, acquiring a user voice.

Where, the implementation of S701 can be referred to the foregoing embodiments and will not be repeated herein.

S702, acquiring a signal strength of the vehicle-mounted device.

Where, the signal strength of the vehicle-mounted device refers to the signal strength of the network signal or communication signal of the vehicle-mounted device. For example, the signal strength of the vehicle-mounted device can be measured by the data transmission rate between the vehicle-mounted device and the server, and can be detected by the signal detection software or hardware preset on the vehicle-mounted device.

S703, determining whether the signal strength of the vehicle-mounted device is greater than a preset strength threshold value.

Specifically, if the signal strength is less than or equal to the preset strength threshold value, it indicates that the current vehicle-mounted scenario belongs to the weak network scenario, and the efficiency of online recognition on the user voice is not high, so the S704 is executed. If the signal strength is greater than the strength threshold value, it indicates that the network signal of the current vehicle-mounted scenario is good, the efficiency of online recognition on the user voice is relatively higher, and the S709 is executed.

S704, performing an offline recognition on the user voice to obtain an offline recognition text, and sending the user voice to a server.

S705, determining that there is a text matching the offline recognition text in the local text database.

Specifically, if there is a text matching the offline recognition text in the local text database, the S706 is executed; otherwise, the S708 is executed.

S706, parsing the offline recognition text to obtain an offline parsing result of the user voice.

S707, controlling the vehicle-mounted device according to the offline parsing result.

S708, waiting for the online parsing result of the user voice returned by the server.

Specifically, for the above waiting for the online parsing result of the user voice returned by the server, if the online parsing result of the user voice returned by the server is received, the S710 is executed.

Where, implementations of S704 to S708 can be referred to the foregoing embodiments and will not be repeated herein.

S709, sending the user voice to the server for performing online voice recognition and semantics parsing on the user voice.

Specifically, in the case that the signal strength of the vehicle-mounted device is greater than the strength threshold value, the user voice is directly sent to the server for performing the online voice recognition and semantics parsing on the user voice, and the S710 is executed, without performing the offline recognition.

S710, controlling, after receiving the online parsing result returned by the server, the vehicle-mounted device according to the online parsing result.

Where, the implementation of S710 can be referred to the foregoing embodiments and will not be repeated herein.

In the present embodiment, before the user voice are recognized and parsed, the signal strength of the vehicle-mounted device is acquired to determine whether the current scenario is weak network scenario. Only under the weak network scenario, will both the offline recognition and online recognition be performed simultaneously. Otherwise, the online recognition is performed directly. Therefore, ensuring that the offline recognition and online recognition are performed simultaneously in the weak network scenario can improve the efficiency of user voice processing, while ensuring the accuracy of user voice processing as much as possible, thereby ensuring the accuracy of voice response of the vehicle-mounted device and improving the efficiency of voice response of the vehicle-mounted device under the weak network scenario.

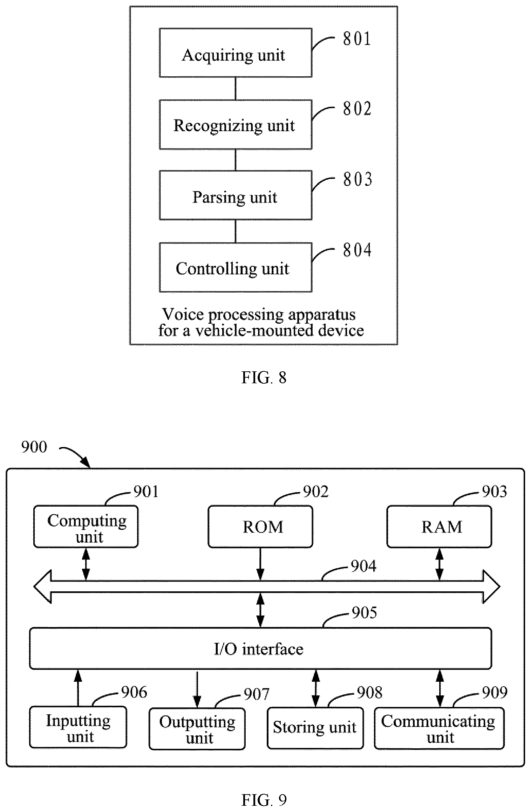

FIG. 8 is a schematic diagram according to Embodiment VII the present application. As shown in FIG. 8, the voice processing apparatus for the vehicle-mounted device provided in the present embodiment includes:
an acquiring unit 801, configured to acquire a user voice;
a recognizing unit 802, configured to perform an offline recognition on the user voice to obtain an offline recognition text, and send the user voice to a server for performing an online voice recognition and semantics parsing on the user voice;
a parsing unit 803, configured to parse the offline recognition text to obtain an offline parsing result of the user voice if there is a text matching the offline recognition text in the text database;
a controlling unit 804, configured to control the vehicle-mounted device according to the offline parsing result.

In a possible implementation, the parsing unit 803 further includes:
an online parsing module, configured to wait for, if there is no text matching the offline recognition text in the text database, an online parsing result of the user voice returned by the server.

In a possible implementation, the controlling unit 804 further includes:
a controlling sub-module, configured to control, after receiving the online parsing result returned by the server, the vehicle-mounted device according to the online parsing result.

In a possible implementation, the parsing unit 803 includes:
a first offline parsing module, configured to acquire a parsing semantics associated with the offline recognition text in the preset mapping relationship between multiple texts and parsing semantics in the text database, and determine the parsing semantics associated with the offline recognition text as the offline parsing result.

In a possible implementation, the parsing unit 803 includes:
a second offline parsing module, configured to parse the offline recognition text through a semantics parsing model to obtain the offline parsing result, where training data used by the semantics parsing model in a training process includes the text in the text database.

In a possible implementation, the acquiring unit 801 includes:
a history data acquiring module, configured to acquire pre-collected user history data, and the user history data includes multiple texts input by the user through voice within the history time period;
the apparatus further includes:
   a sending unit, configured to send user history data to the server;
   a receiving unit, configured to receive the text database and semantics parsing model returned by the server.

In a possible implementation, the acquiring unit 801 includes:
a history data acquiring module, configured to acquire pre-collected user history data, and user history data includes multiple texts obtained by voice recognition input by the user within the history time period;
the apparatus further includes:
   a data processing unit, configured to screen multiple texts in the user history data according to the occurrence frequency and/or proportion of each text in the user history data, and obtain the text database according to a text after screening in the user history data;
   where the text database includes the text in the user history data whose occurrence frequency is greater than or equal to a preset first threshold value, and/or a total proportion of all texts in the text database in the user history data is greater than or equal to a preset second threshold value.

In a possible implementation, the acquiring unit 801 includes:
a signal acquiring module, configured to acquire a signal strength of vehicle-mounted device;
the recognizing unit 802 includes:
   a first recognizing sub-module, configured to perform, if the signal strength is less than or equal to a preset strength threshold value, an offline recognition on the user voice to obtain an offline recognition text, and send the user voice to the server.

In a possible implementation, the recognizing unit 802 further includes:
a second recognizing sub-module, configured to send, if the signal strength is greater than the strength threshold value, the user voice to the server for performing an online voice recognition and semantics parsing on the user voice;
the controlling unit 804 includes:
   a controlling subunit, configured to control, after receiving the online parsing result returned by the server, the vehicle-mounted device according to the online parsing result.

The voice processing apparatus of the vehicle-mounted device provided in FIG. 8 can perform the above corresponding method embodiments, and its implementation principle and technical effect are similar, which will not be repeated herein.

According to the embodiments of the present application, the present application also provides an electronic device and a readable storage medium.

According to the embodiments of the present application, the present application also provides a computer program product including a computer program stored in a readable storage medium from which at least one processor of an electronic device can read the computer program, and the at least one processor executes the computer program to cause the electronic device to execute the solution provided by any one of the above embodiments.

FIG. 9 shows a schematic block diagram of an example electronic device 900 that can be used to implement embodiments of the present application. The electronic device refers to represent various forms of digital computers, such as a laptop computer, a desktop computer, a workstation, a personal digital assistant, a server, a blade server, a mainframe computer, and other suitable computers. The electronic device may also represent various forms of mobile apparatuses, such as a personal digital assistant, a cellular phone, a smart phone, a wearable device, and other similar computing devices. The components shown herein, their connections and relationships, and their functions are merely illustrative of and not a limitation on the implementation of the present disclosure described and/or required herein.

As shown in FIG. 9, the electronic device 900 includes a computing unit 901, which can perform various appropriate actions and processing according to a computer program stored in a read only memory (ROM) 902 or a computer program loaded from the storing unit 608 into a random access memory (RAM) 903. In the RAM 903, various programs and data required for the operation of the device 900 can also be stored. The computing unit 901, the ROM 902 and the RAM 903 are connected to each other through a bus 904. An input/output (I/O) interface 905 is also connected to the bus 904.

A plurality of components in the device 900 are connected to the I/O interface 905, including: an inputting unit 906, for example a keyboard, a mouse, etc.; an outputting unit 907, for example various types of displays, speakers, etc.; a storing unit 908, for example a magnetic disk, an optical disk, etc.; and a communicating unit 909, for example a network card, a modem, a wireless communication transceiver, etc. The communicating unit 909 allows the device 900 to exchange information/data with other devices through a computer network such as the Internet and/or various telecommunication networks.

The computing unit 901 may be various general-purpose and/or special-purpose processing components with processing and computing capacities. Some examples of the computing unit 901 include, but are not limited to, a central processing unit (CPU), a graphics processing unit (GPU), various dedicated artificial intelligence (AI) computing chips, various computing units that run machine learning model algorithms, a digital signal processor (DSP), and any suitable processor, controller, microcontroller, etc. The computing unit 901 performs various methods and processing described above, for example the voice processing method for a vehicle-mounted device. For example, in some embodiments, the voice processing method for a vehicle-mounted device can be implemented as a computer software program, which is tangibly contained in a machine-readable medium, for example the storing unit 908. In some embodiments, part or all of the computer programs may be loaded and/or installed on the device 900 via the ROM 902 and/or the communicating unit 909. When the computer program is loaded into the RAM 903 and executed by the computing unit 901, one or more steps of the voice processing method for a vehicle-mounted device described above can be executed. Alternatively, in other embodiments, the computing unit 901 may be configured to execute the voice processing method for a vehicle-mounted device in any other suitable manners (for example, by means of firmware).

Various implementations of the system and technology described above herein may be implemented in a digital electronic circuit system, an integrated circuit system, a field programmable gate array (FPGA), an application specific integrated circuit (ASIC), an application specific standard product (ASSP), a system-on-chip (SOC), a load programmable logic device (CPLD), a computer hardware, a firmware, a software, and/or combinations thereof. These various implementations may include: being implemented in one or more computer programs that can be executed and/or interpreted on a programmable system including at least one programmable processor, which can be a dedicated or general-purpose programmable processor and can receive data and instructions from a storage system, at least one input apparatus, and at least one output apparatus and transmit data and instructions to the storage system, the at least one input apparatus, and the at least one output apparatus.

The program code for implementing the method according to the present disclosure can be written in any combination of one or more programming languages. These program codes may be provided to the processors or controllers of a general-purpose computer, a special-purpose computer, or other programmable data processing apparatuses, such that the program codes, when executed by the processor or controller, cause the functions/operations specified in the flowcharts and/or block diagrams to be implemented. The program code may be executed entirely on the machine, partially on the machine, partially on the machine as an independent software package and partially on the remote machine, or entirely on the remote machine or server.

In the context of the present disclosure, a machine-readable medium may be a tangible medium that may contain or store a program for use by the instruction execution system, apparatus, or device or in combination with the instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor system, apparatus, or device, or any suitable combination of the foregoing contents. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing contents.

In order to provide interaction with the user, the system and technology described herein can be implemented on a computer that has: a display apparatus used to display information to the user (for example, a cathode ray tube (CRT) or liquid crystal display (LCD) monitor); and a keyboard and a pointing apparatus (for example, a mouse or a trackball), through which the user can provide input to the computer. Other types of apparatuses can also be used to provide interaction with the user; for example, the feedback provided to the user can be any form of sensory feedback (for example, visual feedback, auditory feedback, or tactile feedback); and any form (including sound input, voice input or tactile input) can be used to receive input from the user.

The system and technology described herein can be implemented in a computing system that includes a back-end component (for example, as a data server), or a computing system that includes a middleware component (for example, an application server), or a computing system that includes a front-end component (for example, a user computer with a graphical user interface or a web browser, and the user can interact with the implementation of the system and technology described herein through the graphical user interface or web browser), or a computing system that includes any combination of such back-end component, middleware component, or front-end component. The components of the system can be connected to each other through any form or medium of digital data communication (e.g., a communication network). Example of the communication network include: local area network (LAN), wide area network (WAN), and the Internet.

The computer system can include a client and a server that are generally far away from each other and usually interact with each other through a communication network. The relationship between the client and the server is generated by a computer program running on corresponding computers and having a client-server relationship with each other. The server can be a cloud server, also known as a cloud computing server or a cloud host, which is a host product in the cloud computing service system, to solve the defects of difficult management and weak business scalability in traditional physical host and VPS service ("Virtual Private Server", or VPS for short). The server can also be a server of a distributed system or a server combined with a blockchain.

Understanding that the various forms of processing shown above can be used to reorder, add or delete steps. For example, the various steps described in the present application can be performed in parallel, sequentially, or in a different order, as long as the desired result of the technical solution disclosed in the present application can be achieved, which is not limited herein.

## Claims

1. A voice processing method for a vehicle-mounted device, comprising:
acquiring (S201) a user voice within a vehicle;
performing (S202) an offline recognition on the user voice to obtain an offline recognition text, and sending the user voice to a server for performing an online voice recognition and semantics parsing on the user voice;
parsing (S203), if there is a text matching the offline recognition text in a text database, the offline recognition text to obtain an offline parsing result of the user voice;
controlling (S204) the vehicle-mounted device according to the offline parsing result;
**characterized in that** the parsing (S203) the offline recognition text to obtain an offline parsing result of the user voice comprises:
parsing (S503) the offline recognition text by a semantics parsing model to obtain the offline parsing result, wherein training data used by the semantics parsing model in a training process comprises a text in the text database;
wherein the controlling (S204) the vehicle-mounted device according to the offline parsing result comprises:
when the vehicle-mounted device is a central control device, controlling the central control device to run a corresponding application, or controlling the central control device to send the control instruction to at least one of an air conditioner, a car window, and a wiper that is controlled;
wherein the method further comprises:
acquiring pre-collected user history data, wherein the user history data comprises multiple texts obtained by voice recognition input by the user within a history time period, wherein different time weights for different time periods within a history time period are preset;
determining a time weight of each text in the user history data;
for each text in the user history data, calculating a text weight of the each text in the user history data based on a product of the time weight of each text and number of occurrences of the each text in the user history data;
selecting a preset number of texts from the user history data according to sequence of the text weight from high to low for constructing or updating the text database, or selecting texts whose text weight is greater than a preset weight threshold value from the user history data for constructing or updating the text database;
sending the constructed and/or updated text database to the server for the server to train the semantics parsing model based on the text database, and then send the semantics parsing model to the vehicle-mounted device.

2. The method according to claim 1, wherein the method further comprises:
waiting for (S306), if there is no text matching the offline recognition text in the text database, an online parsing result of the user voice returned by the server;
controlling (S307), after receiving the online parsing result returned by the server, the vehicle-mounted device according to the online parsing result.

3. The method according to claim 1, wherein the parsing (S203) the offline recognition text to obtain an offline parsing result of the user voice comprises:
acquiring (S403) a parsing semantics associated with the offline recognition text in a preset mapping relationship between multiple texts and parsing semantics in the text database;
determining (S404) the parsing semantics associated with the offline recognition text as the offline parsing result.

4. The method according to any one of claims 1 to 3, wherein the method further comprises:
acquiring (S702) a signal strength of the vehicle-mounted device;
the performing (S202) an offline recognition on the user voice to obtain an offline recognition text, and sending the user voice to a server comprises:
performing (S704), if the signal strength is less than or equal to a preset strength threshold value, the offline recognition on the user voice to obtain the offline recognition text, and sending the user voice to the server.

5. The method according to claim 4, wherein the method further comprises:
sending (S709), if the signal strength is greater than the strength threshold value, the user voice to the server for performing the online voice recognition and semantics parsing on the user voice;
controlling (S710), after receiving the online parsing result returned by the server, the vehicle-mounted device according to the online parsing result.

6. A voice processing apparatus for a vehicle-mounted device, comprising:
an acquiring unit (801), configured to acquire a user voice within a vehicle;
a recognizing unit (802), configured to perform an offline recognition on the user voice to obtain an offline recognition text, and send the user voice to a server for performing an online voice recognition and semantics parsing on the user voice;
a parsing unit (803), configured to parse, if there is a text matching the offline recognition text in a text database, the offline recognition text to obtain an offline parsing result of the user voice;
a controlling unit (804), configured to control the vehicle-mounted device according to the offline parsing result,
**characterized in that** the parsing unit (803) comprises:
a second offline parsing module, configured to parse the offline recognition text by a semantics parsing model to obtain the offline parsing result, wherein training data used by the semantics parsing model in a training process comprises a text in the text database;
wherein the controlling unit (804) is further configured to control a central control device to run a corresponding application, or control a central control device to send the control instruction to at least one of an air conditioner, a car window, and a wiper that is controlled when the vehicle-mounted device is the central control device;
wherein the acquiring unit (801) further comprises:
a history data acquiring module, configured to acquire pre-collected user history data, and user history data comprises multiple texts obtained by voice recognition input by the user within a history time period, wherein different time weights for different time periods within a history time period are preset;
the apparatus further comprises a data processing unit, configured to:
determine a time weight of each text in the user history data;
for each text in the user history data, calculate a text weight of the each text in the user history data based on a product of the time weight of each text and number of occurrences of the each text in the user history data;
select a preset number of texts from the user history data according to sequence of the text weight from high to low for constructing or updating the text database, or select texts whose text weight is greater than a preset weight threshold value from the user history data for constructing or updating the text database;
the apparatus further comprises:
a sending unit, configured to send the constructed and/or updated text database to the server for the server to train the semantics parsing model based on the text database, and then send the semantics parsing model to the vehicle-mounted device.

7. The apparatus according to claim 6, wherein the parsing unit (803) further comprises:
an online parsing module, configured to wait for, if there is no text matching the offline recognition text in the text database, an online parsing result of the user voice returned by the server;
the controlling unit (804) further comprises:
a controlling sub-module, configured to control, after receiving the online parsing result returned by the server, the vehicle-mounted device according to the online parsing result.

8. The apparatus according to claim 6, wherein the parsing unit (803) comprises:
a first offline parsing module, configured to acquire a parsing semantics associated with the offline recognition text in a preset mapping relationship between multiple texts and the parsing semantics in the text database, and determine the parsing semantics associated with the offline recognition text as the offline parsing result.

9. An electronic device, comprising:
at least one processor; and
a memory communicatively connected with the at least one processor; wherein the memory stores instructions which, when executed by the at least one processor, cause the at least one processor to perform the method according to any one of claims 1 to 5.

10. A non-transitory computer-readable storage medium storing computer instructions which, when executed by a computer, cause the computer to perform the method according to any one of claims 1 to 5.

11. A computer program product, comprising a computer program, which when executed by a processor, causes the processor to implement the method of any one of claims 1 to 5.

12. A vehicle comprising a vehicle body, wherein a central control device of the vehicle body comprises the electronic device according to claim 9.

## Patentansprüche

1. Sprachverarbeitungsverfahren für eine fahrzeugmontierte Vorrichtung, umfassend:
Erfassen (S201) einer Benutzerstimme innerhalb eines Fahrzeugs;
Durchführen (S202) einer Offline-Erkennung an der Benutzerstimme, um einen Offline-Erkennungstext zu erhalten, und Senden der Benutzerstimme an einen Server zum Durchführen einer Online-Spracherkennung und eines semantischen Parsens an der Benutzerstimme;
Parsen (S203) des Offline-Erkennungstextes, wenn es einen mit dem Offline-Erkennungstext übereinstimmenden Text in einer Textdatenbank gibt, um ein Offline-Parsen-Ergebnis der Benutzerstimme zu erhalten;
Steuern (S204) der fahrzeugmontierten Vorrichtung gemäß dem Offline-Parsen-Ergebnis;
**dadurch gekennzeichnet, dass** das Parsen (S203) des Offline-Erkennungstextes, um ein Offline-Parsen-Ergebnis der Benutzerstimme zu erhalten, umfasst:
Parsen (S503) des Offline-Erkennungstextes durch ein semantisches Parsen-Modell, um das Offline-Parsen-Ergebnis zu erhalten, wobei Trainingsdaten, die von dem semantischen Parsen-Modell in einem Trainingsprozess verwendet werden, einen Text in der Textdatenbank umfassen;
wobei das Steuern (S204) der fahrzeugmontierten Vorrichtung gemäß dem Offline-Parsen-Ergebnis umfasst:
wenn die fahrzeugmontierte Vorrichtung eine zentrale Steuervorrichtung ist, das Steuern der zentralen Steuervorrichtung, um eine entsprechende Anwendung auszuführen, oder das Steuern der zentralen Steuervorrichtung, um die Steueranweisung an wenigstens einer/einem von einer Klimaanlage, einem Autofenster und einem Scheibenwischer zu senden, die/das/der gesteuert werden;
wobei das Verfahren ferner umfasst:
Erfassen von im Voraus gesammelten Benutzerverlaufsdaten, wobei die Benutzerverlaufsdaten mehrere Texte umfassen, die durch Spracherkennungseingabe durch den Benutzer innerhalb eines Verlaufszeitraums erhalten wurden, wobei unterschiedliche Zeitgewichtungen für unterschiedliche Zeiträume innerhalb eines Verlaufszeitraums voreingestellt sind;
Bestimmen einer Zeitgewichtung jedes Textes in den Benutzerverlaufsdaten;
für jeden Text in den Benutzerverlaufsdaten, Berechnen einer Textgewichtung des jeweiligen Textes in den Benutzerverlaufsdaten auf Grundlage eines Produkts der Zeitgewichtung jedes Texts und der Anzahl von Vorkommnissen des jeweiligen Textes in den Benutzerverlaufsdaten;
Auswählen einer voreingestellten Anzahl von Texten aus den Benutzerverlaufsdaten gemäß der Reihenfolge der Textgewichtung von hoch zu niedrig zum Aufbauen oder Aktualisieren der Textdatenbank, oder Auswählen von Texten, deren Textgewichtung größer als ein voreingestellter Gewichtungsschwellenwert ist, aus den Benutzerverlaufsdaten zum Aufbauen oder Aktualisieren der Textdatenbank;
Senden der aufgebauten und/oder aktualisierten Textdatenbank an den Server, damit der Server das semantische Parsen-Modell auf Grundlage der Textdatenbank trainiert, und dann Senden des semantischen Parsen-Modells an die fahrzeugmontierte Vorrichtung.

2. Verfahren nach Anspruch 1, wobei das Verfahren ferner umfasst:
falls es keinen Text gibt, der mit dem Offline-Erkennungstext in der Textdatenbank übereinstimmt, Warten auf (S306) ein von dem Server zurückgegebenes Online-Parsen-Ergebnis der Benutzerstimme;
Steuern (S307), nach dem Empfang des von dem Server zurückgegebenen Online-Parsen-Ergebnisses, der fahrzeugmontierten Vorrichtung gemäß dem Online-Parsen-Ergebnis.

3. Verfahren nach Anspruch 1, wobei das Parsen (S203) des Offline-Erkennungstextes, um ein Offline-Parsen-Ergebnis der Benutzerstimme zu erhalten, umfasst:
Erfassen (S403) einer dem Offline-Erkennungstext zugeordneten Parsen-Semantik in einer voreingestellten Abbildungsbeziehung zwischen mehreren Texten und Parsen-Semantiken in der Textdatenbank;
Bestimmen (S404) der dem Offline-Erkennungstext zugeordneten Parsen-Semantik als das Offline-Parsen-Ergebnis.

4. Verfahren nach einem der Ansprüche 1 bis 3, wobei das Verfahren ferner umfasst:
Erfassen (S702) einer Signalstärke der fahrzeugmontierten Vorrichtung;
wobei das Durchführen (S202) einer Offline-Erkennung an der Benutzerstimme, um einen Offline-Erkennungstext zu erhalten, und das Senden der Benutzerstimme an einen Server umfasst:
Durchführen (S704) der Offline-Erkennung an der Benutzerstimme, um den Offline-Erkennungstext zu erhalten, wenn die Signalstärke kleiner oder gleich einem voreingestellten Stärkenschwellenwert ist, und Senden der Benutzerstimme an den Server.

5. Verfahren nach Anspruch 4, wobei das Verfahren ferner umfasst:
Senden (S709) der Benutzerstimme an den Server für das Durchführen der Online-Spracherkennung und des semantischen Parsens an der Benutzerstimme, wenn die Signalstärke größer als der Stärkenschwellenwert ist;
Steuern (S710) der fahrzeugmontierten Vorrichtung nach Empfang des von dem Server zurückgegebenen Online-Parsen-Ergebnisses gemäß dem Online-Parsen-Ergebnis.

6. Sprachverarbeitungseinrichtung für eine in fahrzeugmontierte Vorrichtung, umfassend:
eine Erfassungseinheit (801), die dazu konfiguriert ist, eine Benutzerstimme innerhalb eines Fahrzeugs zu erfassen;
eine Erkennungseinheit (802), die dazu konfiguriert ist, eine Offline-Erkennung an der Benutzerstimme durchzuführen, um einen Offline-Erkennungstext zu erhalten, und die Benutzerstimme an einen Server zu senden, um eine Online-Spracherkennung und ein semantisches Parsen an der Benutzerstimme durchzuführen;
eine Parsen-Einheit (803), die dazu konfiguriert ist, den Offline-Erkennungstext zu parsen, wenn es einen Text gibt, der mit dem Offline-Erkennungstext in einer Textdatenbank übereinstimmt, um ein Offline-Parsen-Ergebnis der Benutzerstimme zu erhalten;
eine Steuereinheit (804), die dazu konfiguriert ist, die fahrzeugmontierte Vorrichtung gemäß dem Offline-Parsen-Ergebnis zu steuern,
**dadurch gekennzeichnet, dass** die Parsen-Einheit (803) umfasst:
ein zweites Offline-Parsen-Modul, das dazu konfiguriert ist, den Offline-Erkennungstext durch ein semantisches Parsen-Modell zu parsen, um das Offline-Parsen-Ergebnis zu erhalten, wobei Trainingsdaten, die von dem semantischen Parsen-Modell in einem Trainingsprozess verwendet werden, einen Text in der Textdatenbank umfassen;
wobei die Steuereinheit (804) dazu konfiguriert ist, eine zentrale Steuervorrichtung zu steuern, um eine entsprechende Anwendung auszuführen, oder eine zentrale Steuervorrichtung zu steuern, um die Steueranweisung an wenigstens eine/eines von einer Klimaanlage, einem Autofenster und einem Scheibenwischer zu senden, die/das/der gesteuert werden, wenn die fahrzeugmontierte Vorrichtung die zentrale Steuervorrichtung ist;
wobei die Erfassungseinheit (801) ferner umfasst:
ein Verlaufsdatenerfassungsmodul, das dazu konfiguriert ist, vorgesammelte Benutzerverlaufsdaten zu erfassen, und Benutzerverlaufsdaten mehrere Texte umfasst, die durch Spracherkennungseingabe durch den Benutzer innerhalb eines Verlaufszeitraums erhalten werden, wobei unterschiedliche Zeitgewichtungen für unterschiedliche Zeiträume innerhalb eines Verlaufszeitraums voreingestellt sind;
die Einrichtung ferner eine Datenverarbeitungseinheit umfasst, die konfiguriert ist, zum:
Bestimmen einer Zeitgewichtung jedes Textes in den Benutzerverlaufsdaten;
für jeden Text in den Benutzerverlaufsdaten, Berechnen einer Textgewichtung des jeweiligen Textes in den Benutzerverlaufsdaten auf Grundlage eines Produkts der Zeitgewichtung jedes Texts und der Anzahl von Vorkommnissen des jeweiligen Textes in den Benutzerverlaufsdaten;
Auswählen einer voreingestellten Anzahl von Texten aus den Benutzerverlaufsdaten gemäß der Reihenfolge der Textgewichtung von hoch zu niedrig zum Aufbauen oder Aktualisieren der Textdatenbank, oder Auswählen von Texten, deren Textgewichtung größer als ein voreingestellter Gewichtungsschwellenwert ist, aus den Benutzerverlaufsdaten zum Aufbauen oder Aktualisieren der Textdatenbank;
die Einrichtung ferner umfasst:
eine Sendeeinheit, die dazu konfiguriert ist, die aufgebauten und/oder aktualisierten Textdatenbank an den Server zu senden, damit der Server das semantische Parsen-Modell auf Grundlage der Textdatenbank trainiert, und dann das semantische Parsen-Modell an die fahrzeugmontierte Vorrichtung zu senden.

7. Einrichtung nach Anspruch 6, wobei die Parsen-Einheit (803) ferner umfasst:
ein Online-Parsen-Modul, das dazu konfiguriert ist, auf ein Online-Parsen-Ergebnis der Benutzerstimme, das von dem Server zurückgegeben wird, zu warten, wenn es keinen Text gibt, der mit dem Offline-Erkennungstext in der Textdatenbank übereinstimmt;
die Steuereinheit (804) ferner umfasst:
ein Steuerteilmodul, das dazu konfiguriert ist, nach Empfang des von dem Server zurückgegebenen Online-Parsen-Ergebnisses die fahrzeugmontierte Vorrichtung gemäß dem Online-Parsen-Ergebnis zu steuern.

8. Einrichtung nach Anspruch 6, wobei die Parsen-Einheit (803) umfasst:
ein erstes Offline-Parsen-Modul, das dazu konfiguriert ist, eine Parsen-Semantik zu erfassen, die dem Offline-Erkennungstext in einer voreingestellten Abbildungsbeziehung zwischen mehreren Texten und der Parsen-Semantik in der Textdatenbank zugeordnet ist, und die dem Offline-Erkennungstext zugeordnete Parsen-Semantik als das Offline-Parsen-Ergebnis zu bestimmen.

9. Elektronische Vorrichtung, umfassend:
wenigstens einen Prozessor; und
einen Primärspeicher, der kommunikativ mit dem wenigstens einen Prozessor verbunden ist;
wobei der Primärspeicher Anweisungen speichert, die, wenn sie von dem wenigstens einen Prozessor ausgeführt werden, den wenigstens einen Prozessor veranlassen, das Verfahren nach einem der Ansprüche 1 bis 5 durchzuführen.

10. Nichttransitorisches computerlesbares Speichermedium, das Computeranweisungen speichert, die, wenn sie durch einen Computer ausgeführt werden, den Computer veranlassen, das Verfahren nach einem der Ansprüche 1 bis 5 durchzuführen.

11. Computerprogrammprodukt, umfassend ein Computerprogramm, das, wenn es durch einen Prozessor ausgeführt wird, den Prozessor veranlasst, das Verfahren nach einem der Ansprüche 1 bis 5 zu implementieren.

12. Fahrzeug, umfassend eine Fahrzeugkarosserie, wobei eine zentrale Steuervorrichtung der Fahrzeugkarosserie die elektronische Vorrichtung nach Anspruch 9 umfasst.

## Revendications

1. Procédé de traitement vocal pour un dispositif monté sur véhicule, comprenant :
l'acquisition (S201) d'une voix d'utilisateur dans un véhicule ;
la réalisation (S202) d'une reconnaissance hors ligne sur la voix d'utilisateur pour obtenir un texte de reconnaissance hors ligne, et l'envoi de la voix d'utilisateur à un serveur pour réaliser une reconnaissance vocale en ligne et une analyse sémantique sur la voix de l'utilisateur ;
l'analyse (S203), s'il existe un texte correspondant au texte de reconnaissance hors ligne dans une base de données de texte, du texte de reconnaissance hors ligne pour obtenir un résultat d'analyse hors ligne de la voix d'utilisateur ;
la commande (S204) du dispositif monté sur véhicule en fonction du résultat d'analyse hors ligne ;
**caractérisé en ce que** l'analyse (S203) du texte de reconnaissance hors ligne pour obtenir un résultat d'analyse hors ligne de la voix d'utilisateur comprend :
l'analyse (S503) du texte de reconnaissance hors ligne par un modèle d'analyse sémantique pour obtenir le résultat d'analyse hors ligne, les données d'apprentissage utilisées par le modèle d'analyse sémantique dans un processus d'apprentissage comprenant un texte dans la base de données de texte ;
dans lequel la commande (S204) du dispositif monté sur véhicule en fonction du résultat d'analyse hors ligne comprend :
lorsque le dispositif monté sur véhicule est un dispositif de commande central, la commande du dispositif de commande central pour exécuter une application correspondante, ou la commande du dispositif de commande central pour envoyer l'instruction de commande à au moins un climatiseur, une vitre de voiture et/ou un essuie-glace commandé ;
dans lequel le procédé comprend en outre :
l'acquisition de données d'historique d'utilisateur pré-collectées, les données d'historique d'utilisateur comprenant de multiples textes obtenus par reconnaissance vocale saisis par l'utilisateur au cours d'une période d'historique, différentes poids temporels pour différentes périodes de temps au sein d'une période d'historique étant prédéfinis ;
la détermination d'un poids temporel de chaque texte dans les données d'historique d'utilisateur ;
pour chaque texte dans les données d'historique d'utilisateur, le calcul d'un poids de texte de chaque texte dans les données d'historique d'utilisateur sur la base d'un produit du poids temporel de chaque texte et du nombre d'occurrences de chaque texte dans les données d'historique d'utilisateur ;
la sélection d'un nombre prédéfini de textes à partir des données d'historique d'utilisateur selon une séquence de poids de texte de haut en bas pour construire ou mettre à jour la base de données de texte, ou la sélection des textes dont le poids de texte est supérieur à une valeur seuil de poids prédéfinie à partir des données d'historique d'utilisateur pour construire ou mettre à jour la base de données de texte ;
l'envoi de la base de données de texte construite et/ou mise à jour au serveur pour que le serveur entraîne le modèle d'analyse sémantique sur la base de la base de données de texte, puis envoie le modèle d'analyse sémantique au dispositif monté sur véhicule.

2. Procédé selon la revendication 1, dans lequel le procédé comprend en outre :
l'attente (S306), s'il n'y a pas de texte correspondant au texte de reconnaissance hors ligne dans la base de données de texte, d'un résultat d'analyse en ligne de la voix d'utilisateur renvoyé par le serveur ;
la commande (S307), après réception du résultat d'analyse en ligne renvoyé par le serveur, du dispositif monté sur véhicule en fonction du résultat d'analyse en ligne.

3. Procédé selon la revendication 1, dans lequel l'analyse (S203) du texte de reconnaissance hors ligne pour obtenir un résultat d'analyse hors ligne de la voix d'utilisateur comprend :
l'acquisition (S403) d'une sémantique d'analyse associée au texte de reconnaissance hors ligne dans une relation de mappage prédéfinie entre de multiples textes et l'analyse de la sémantique dans la base de données de texte ;
la détermination (S404) de la sémantique d'analyse associée au texte de reconnaissance hors ligne en tant que résultat d'analyse hors ligne.

4. Procédé selon l'une quelconque des revendications 1 à 3, dans lequel le procédé comprend en outre :
l'acquisition (S702) d'une intensité de signal du dispositif monté sur véhicule ;
l'exécution (S202) d'une reconnaissance hors ligne sur la voix d'utilisateur pour obtenir un texte de reconnaissance hors ligne, et l'envoi de la voix d'utilisateur à un serveur comprennent :
la réalisation (S704), si l'intensité du signal est inférieure ou égale à une valeur seuil d'intensité prédéfinie, de la reconnaissance hors ligne sur la voix d'utilisateur pour obtenir le texte de reconnaissance hors ligne, et l'envoi de la voix d'utilisateur au serveur.

5. Procédé selon la revendication 4, dans lequel le procédé comprend en outre :
l'envoi (S709), si l'intensité du signal est supérieure à la valeur seuil d'intensité, de la voix d'utilisateur au serveur pour réaliser la reconnaissance vocale en ligne et l'analyse sémantique de la voix d'utilisateur ;
la commande (S710), après réception du résultat d'analyse en ligne renvoyé par le serveur, du dispositif monté sur véhicule en fonction du résultat d'analyse en ligne.

6. Appareil de traitement vocal pour un dispositif monté sur véhicule, comprenant :
une unité d'acquisition (801), configurée pour acquérir une voix d'utilisateur dans un véhicule ;
une unité de reconnaissance (802), configurée pour réaliser une reconnaissance hors ligne sur la voix d'utilisateur afin d'obtenir un texte de reconnaissance hors ligne, et l'envoi de la voix d'utilisateur à un serveur pour réaliser une reconnaissance vocale en ligne et une analyse sémantique sur la voix d'utilisateur ;
une unité d'analyse (803), configurée pour analyser, s'il existe un texte correspondant au texte de reconnaissance hors ligne dans une base de données de texte, le texte de reconnaissance hors ligne afin d'obtenir un résultat d'analyse hors ligne de la voix d'utilisateur ;
une unité de commande (804), configurée pour commander le dispositif monté sur véhicule en fonction du résultat d'analyse hors ligne,
**caractérisé en ce que** l'unité d'analyse (803) comprend :
un deuxième module d'analyse hors ligne, configuré pour analyser le texte de reconnaissance hors ligne par un modèle d'analyse sémantique afin d'obtenir le résultat d'analyse hors ligne, les données d'apprentissage utilisées par le modèle d'analyse sémantique dans un processus d'apprentissage comprenant un texte dans la base de données de texte ;
dans lequel l'unité de commande (804) est en outre configurée pour commander un dispositif de commande central afin d'exécuter une application correspondante, ou pour commander un dispositif de commande central pour envoyer l'instruction de commande à au moins l'un parmi un climatiseur, une vitre de voiture et un essuie-glace qui est commandé lorsque le dispositif monté sur véhicule est le dispositif de commande central ;
dans lequel l'unité d'acquisition (801) comprend en outre :
un module d'acquisition de données d'historique, configuré pour acquérir des données d'historique d'utilisateur pré-collectées, et les données d'historique d'utilisateur comprennent de multiples textes obtenus par reconnaissance vocale saisis par l'utilisateur au cours d'une période de temps d'historique, différents poids temporels pour différentes périodes de temps au sein d'une période de temps d'historique sont prédéfinis ;
l'appareil comprend en outre une unité de traitement de données, configurée pour :
déterminer un poids temporel de chaque texte dans les données d'historique d'utilisateur ;
pour chaque texte dans les données d'historique d'utilisateur, calculer un poids de texte de chaque texte dans les données d'historique d'utilisateur sur la base d'un produit du poids temporel de chaque texte et du nombre d'occurrences de chaque texte dans les données d'historique d'utilisateur ;
sélectionner un nombre prédéfini de textes à partir des données d'historique d'utilisateur selon une séquence de poids de texte de haut en bas pour construire ou mettre à jour la base de données de texte, ou sélectionner des textes dont le poids de texte est supérieur à une valeur seuil de poids prédéfinie à partir des données d'historique d'utilisateur pour construire ou mettre à jour la base de données de texte ;
l'appareil comprend en outre :
une unité d'envoi, configurée pour envoyer la base de données de texte construite et/ou mise à jour au serveur afin que le serveur entraîne le modèle d'analyse sémantique sur la base de la base de données de texte, puis envoie le modèle d'analyse sémantique au dispositif monté sur véhicule.

7. Appareil selon la revendication 6, dans lequel l'unité d'analyse (803) comprend en outre :
un module d'analyse en ligne, configuré pour attendre, s'il n'y a pas de texte correspondant au texte de reconnaissance hors ligne dans la base de données de texte, un résultat d'analyse en ligne de la voix d'utilisateur renvoyé par le serveur ;
l'unité de commande (804) comprend en outre :
un sous-module de commande, configuré pour commander, après réception du résultat d'analyse en ligne renvoyé par le serveur, le dispositif monté sur véhicule en fonction du résultat d'analyse en ligne.

8. Appareil selon la revendication 6, dans lequel l'unité d'analyse (803) comprend :
un premier module d'analyse hors ligne, configuré pour acquérir une sémantique d'analyse associée au texte de reconnaissance hors ligne dans une relation de mappage prédéfinie entre de multiples textes et la sémantique d'analyse dans la base de données de texte, et déterminer la sémantique d'analyse associée au texte de reconnaissance hors ligne en tant que résultat d'analyse hors ligne.

9. Dispositif électronique, comprenant :
au moins un processeur ; et
une mémoire connectée de manière communicative audit au moins un processeur ;
dans lequel la mémoire stocke des instructions qui, lorsqu'elles sont exécutées par l'au moins un processeur, amènent l'au moins un processeur à exécuter le procédé selon l'une quelconque des revendications 1 à 5.

10. Support de stockage non transitoire lisible par ordinateur stockant des instructions informatiques qui, lorsqu'elles sont exécutées par un ordinateur, amènent l'ordinateur à exécuter le procédé selon l'une quelconque des revendications 1 à 5.

11. Produit de programme informatique, comprenant un programme informatique qui, lorsqu'il est exécuté par un processeur, amène le processeur à mettre en oeuvre le procédé selon l'une quelconque des revendications 1 à 5.

12. Véhicule comprenant une carrosserie de véhicule, dans lequel un dispositif de commande central de la carrosserie de véhicule comprend le dispositif électronique selon la revendication 9.
